Europäisches Patentamt

European Patent Office

Office européen des brevets

(19)

(11) Numéro de publication: **0 165 854**

**A1**

(12) **DEMANDE DE BREVET EUROPEEN**

(21) Numéro de dépôt: **85401047.7**

(22) Date de dépôt: **28.05.85**

(51) Int. Cl.⁴: **B 66 C 23/84**
**F 16 C 32/06**

(30) Priorité: **29.05.84 FR 8408447**

(43) Date de publication de la demande:
**27.12.85 Bulletin 85/52**

(84) Etats contractants désignés:
**GB IT NL**

(71) Demandeur: **TECHNIP-GEOPRODUCTION**
**Tour TECHNIP 170, Place Henri Regnault**
**F-92090 Paris La Defense(FR)**

(72) Inventeur: **Delamare, Guy Robert**
**Les Iris 50 Quai du Génie**
**F-95220 Herblay(FR)**

(72) Inventeur: **Thomas, Pierre-Armand Roger**
**73 Avenue de la République**
**F-75011 Paris(FR)**

(72) Inventeur: **Naudin, Jean-Claude**
**65 rue Javelot**
**F-75645 Paris Cedex 13(FR)**

(74) Mandataire: **Durand, Yves Armand Louis et al,**
**Cabinet Z. Weinstein 20, Avenue de Friedland**
**F-75008 Paris(FR)**

(54) Dispositif de supportage d'un organe très lourd déplaçable en translation ou en rotation sur une socle fixe.

(57) La présente invention concerne un dispositif de supportaged d'un organe très lourd déplaçable en translation ou en
rotation sur un socle fixe.

Ce dispositif est essentiellement caractérisé en ce que la
surface d'appui de l'orange très lourd sur le socle fixe (3) est
munie d'une pluralité d'enceintes de sustentation (12) à
confinement de fluide sous pression permettant un glissement relatif de l'organe très lourd par rapport au socle fixe
(3) avec un frottement minimum.

Le dispositif de supportage selon l'invention s'applique
par exemple aux grues orientables géantes.

Fig. 4

Dispositif de supportage d'un organe très lourd
déplaçable en translation ou en rotation sur un socle
fixe.

La présente invention a essentiellement pour objet un dispositif de supportage d'un organe très lourd déplaçable en translation ou en rotation sur un socle fixe.

Un tel dispositif permet par exemple le supportage d'une grue orientable géante susceptible de soulever des charges atteignant plusieurs milliers de tonnes, ou encore le supportage d'une poutre ou d'un bras en porte-à-faux supportant des outils de forage et déplaçable sur une plateforme de forage.

On connait déjà des systèmes de montage en rotation de la partie tournante d'une grue sur un socle fixe ou un soubassement, à l'aide de galets associés à des chemins de roulement circulaires. Toutefois, ces systèmes ne sont pas applicables à une grue géante, car, comme on le comprend, il n'est pas possible de réaliser à l'aide des machines existantes des pièces de dimensions suffisantes et présentant la précision requise pour assurer le guidage en rotation de la grue géante.

Par ailleurs, on a déjà proposé des systèmes de supportage en rotation comprenant des roues montées en boggies,

2

coopérant avec des chemins de roulement circulaires.
Mais ici encore, on ne peut pas appliquer de tels systèmes à des grues destinées à soulever des charges
extrèmement lourdes, car non seulement la fabrication
de tels systèmes serait nécessairement coûteuse et
techniquement imparfaite, mais, les roues et les chemins
de roulement ou rails se déformeraient et exigeraient
une puissance gigantesque pour entraîner en rotation la
partie tournante de la grue.

La présente invention a pour but de remédier à tous ces
inconvénients en proposant un dispositif de supportage
d'organes très lourds, assurant une répartition équilibrée
des charges sur une grande surface, ne nécessitant que
des structures relativement légères, permettant de diminuer
considérablement la puissance nécessaire pour entraîner
en rotation l'organe lourd par rapport à son socle, et
facilement réalisable pour un prix relativement modique.

A cet effet, l'invention a pour objet un dispositif de
supportage d'un organe très lourd déplaçable en translation ou en rotation sur un socle fixe, caractérisé en
ce que la surface d'appui de l'organe sur le socle fixe
est munie d'une pluralité d'enceintes de sustentation
à confinement de fluide sous pression permettant un
glissement relatif de l'organe par rapport au socle fixe
avec une traînée de frottement minimum.

Suivant un mode de réalisation, les enceintes précitées
sont chacune constituées par une jupe annulaire gonflable
fermée par la surface d'appui de l'organe lourd précité
et reliée à une source de fluide sous pression qui
alimente également l'espace intérieur délimité par ladite
jupe annulaire pour créer, sous l'effet de la pression,
un film de fluide entre la paroi de la jupe et le socle
fixe.

On précisera ici qu'une butée élastique est avantageusement montée dans l'espace intérieur de chaque
enceinte précitée, pour permettre le repos de l'organe
lourd sur son socle lorsque l'alimentation en fluide sous
pression est interrompue.

Suivant un autre mode de réalisation, les enceintes
précitées sont constituées chacune par un patin ou
analogue en matériau élastiquement déformable, tel que
par exemple un élastomère, solidaire de la face d'appui
de l'organe lourd, et dont la face en regard du socle
fixe forme avec ledit socle un interface alimenté en
fluide sous pression, au travers dudit patin, pour créer
dans celui-ci, sous l'effet de la pression, une pluralité de cavités ou analogues entourées par un rebord
périphérique.

Ainsi, comme on le comprend, une fuite de fluide pourra
s'instaurer entre ce rebord et le socle fixe en regard
de celui-ci pour permettre un déplacement de l'organe
lourd sur ce socle.

On précisera encore que le patin précité est solidaire
de la surface d'appui de l'organe lourd par l'intermédiaire d'au moins un élément formant collecteur de
fluide sous pression et fixé à ladite surface d'appui
par l'intermédiaire d'un coussin ou analogue élastiquement déformable.

Suivant une autre caractéristique de l'invention,
l'organe lourd précité comprend une embase montée
pivotante sur le socle fixe, laquelle embase comporte
à sa périphérie des sabots ou analogues espacés constituant la surface d'appui précitée qui porte les enceintes
à confinement de fluide sous pression, ladite surface d'appui coopérant avec une piste annulaire ménagée sur le socle fixe et qui peut être constituée aussi par la face supérieure d'une couronne extérieurement concentrique audit socle.

Selon encore une autre caractéristique de cette invention, au moins l'un des sabots précités comprend une potence ou analogue contournant la piste annulaire précitée et dont l'extrémité est infléchie vers l'axe de pivotement de l'embase sur le socle fixe pour former une autre surface d'appui qui porte les enceintes précitées et qui coopère avec une autre piste annulaire constituée par la face inférieure de la couronne.

Il convient encore de dire ici que, selon l'invention, le fluide sous pression parvenant aux enceintes précitées peut être de l'air, de l'eau ou de la graisse éventuellement récupérables après échappement desdites enceintes.

Suivant une autre caractéristique de l'invention, l'organe lourd précité est une grue géante dont le soubassement est constitué par le socle fixe précité.

Selon une variante, l'organe lourd précité est une poutre ou un bras en console ou en porte-à-faux déplaçable sur une plate-forme de forage constituant le socle fixe précité.

Mais d'autres caractéristiques et avantages de l'invention apparaîtront mieux dans la description détaillée qui suit et se réfère aux dessins annexés, donnés uniquement à titre d'exemple, et dans lesquels :

- la figure 1 est une vue schématique partielle et en élévation d'une grue géante montée à rotation sur un soubassement, conformément aux principes de l'invention ;

- la figure 2 est une vue en coupe faite sensiblement suivant la ligne II-II de la figure 1 ;

- la figure 3 est une vue de dessous, suivant la flèche III de la figure 1 ;

- la figure 4 est une vue en coupe suivant la ligne IV-IV de la figure 2 et montrant, ce qui n'est pas visible sur cette figure 2, deux enceintes adjacentes à confinement de fluide sous pression solidaires de la surface d'appui supérieure de l'organe lourd ;

- la figure 5 est une vue en coupe et à plus grande échelle illustrant le fonctionnement d'une enceinte de sustentation,

- la figure 6 est une vue en coupe illustrant un autre mode de réalisation d'enceinte de sustentation.

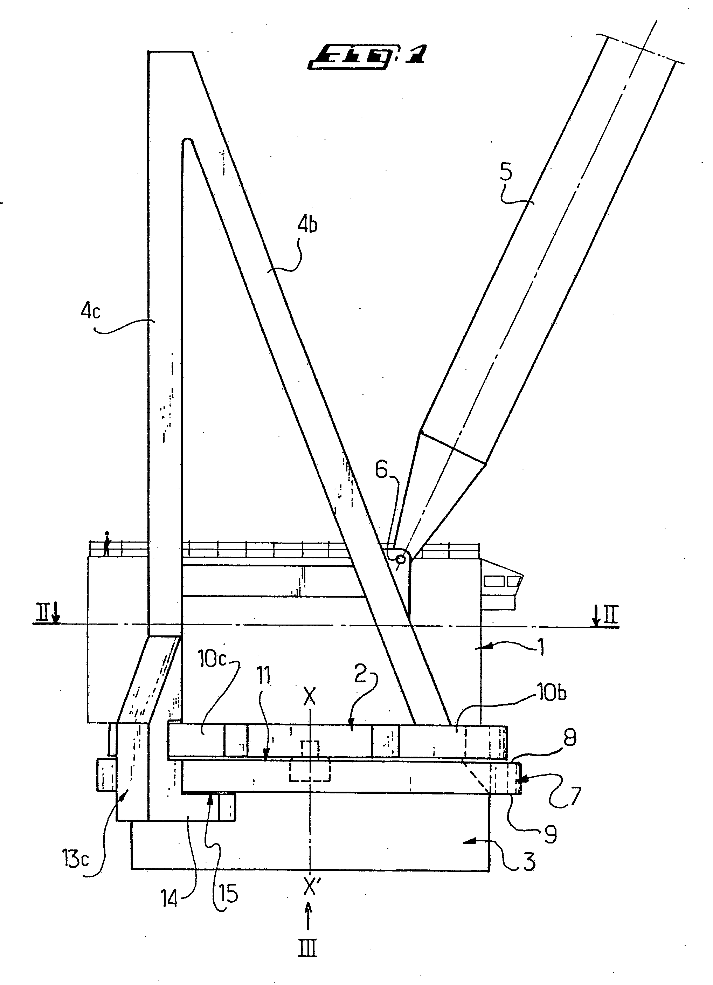

En se reportant plus particulièrement aux figures 1 à 4, on voit un dispositif de supportage d'un organe très lourd constitué, suivant un exemple de réalisation, par une grue 1 solidaire d'une partie tournante ou embase 2 montée pivotante sur un socle fixe ou soubassement 3.

Le mât de la grue forme par exemple une structure triangulée supportée par l'embase 2 et comprenant essentiellement quatre piliers 4a, 4b, 4c et 4d reliés par leurs pieds à ladite embase 2. Une flèche 5 permettant le soulèvement de charges très lourdes est articulée en 6 aux piliers 4a et 4b.

Le soubassement fixe 3 est muni à sa partie supérieure d'une couronne extérieurement concentrique 7 qui forme deux pistes annulaires, à savoir une piste annulaire supérieure 8 et une piste annulaire inférieure 9, ces deux pistes étant sensiblement horizontales et parallèles.

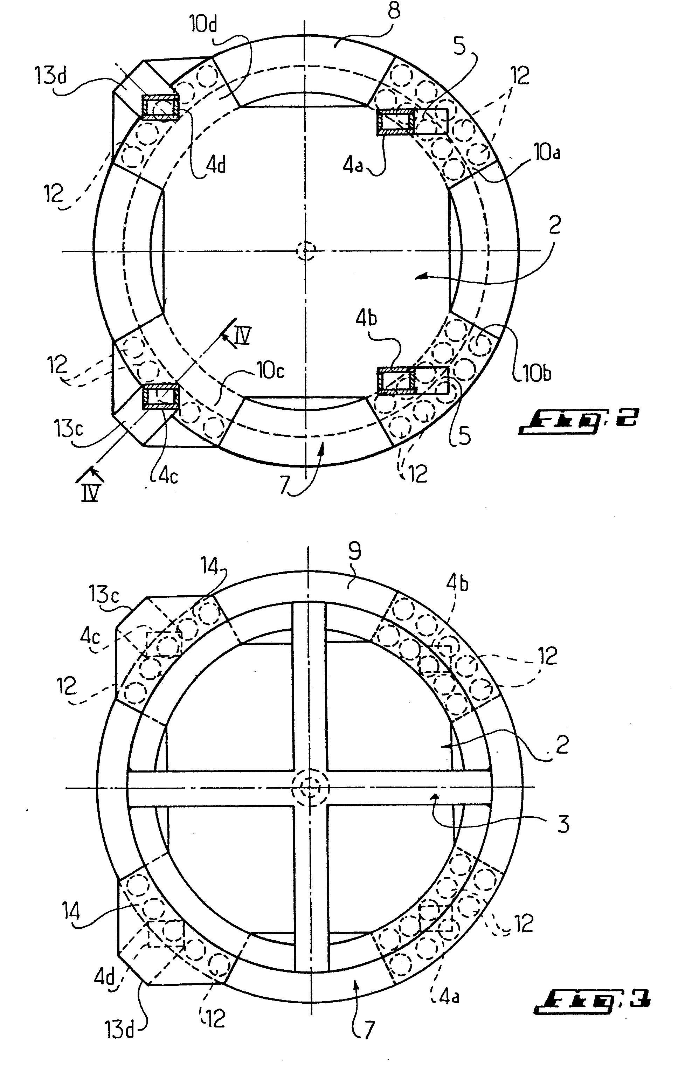

Aux quatre piliers 4a, 4b, 4c et 4d sont respectivement associés quatre sabots 10a, 10b, 10c et 10d qui sont bien visibles sur la figure 2. Plus précisément, les quatre piliers prennent appui par leurs pieds sur leurs sabots respectifs qui couvrent, suivant des secteurs, la piste annulaire supérieure 8 du soubassement fixe 3.

Suivant une caractéristique essentielle de l'invention, chaque sabot 10a, 10b, 10c, 10d de l'embase 2 forme, par sa partie inférieure, une surface 11 d'appui sur la piste annulaire 8, laquelle surface d'appui est munie d'une pluralité d'enceintes de sustentation 12 à confinement de fluide sous pression, et qui seront décrites en détail ultérieurement.

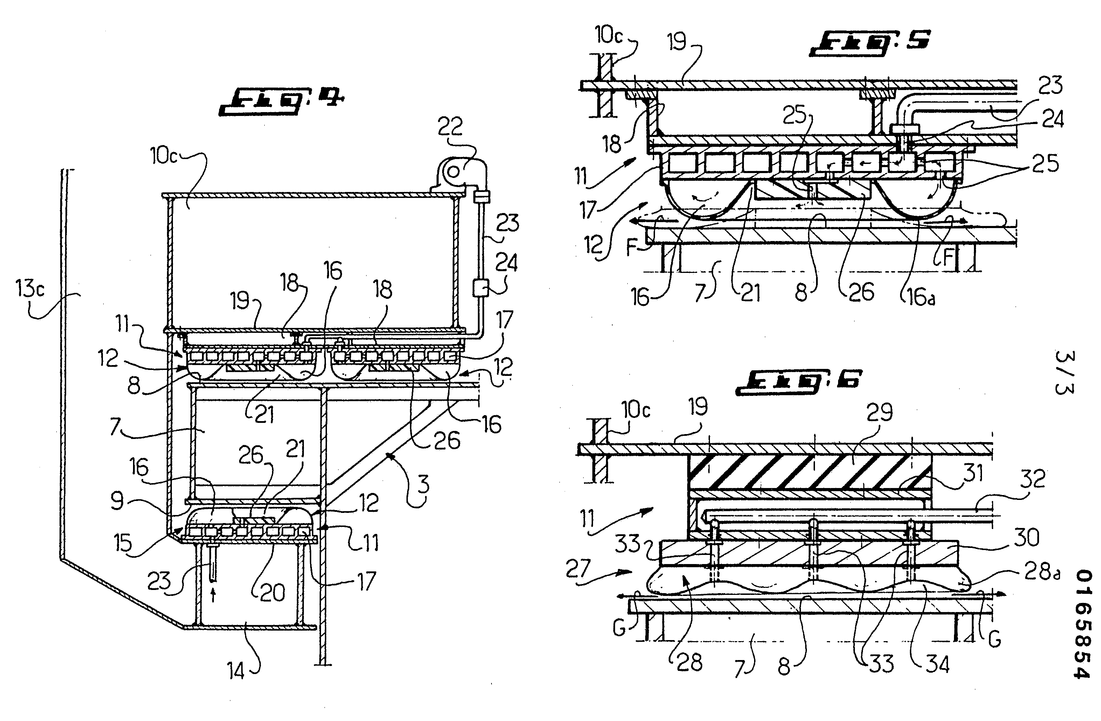

Comme on le voit clairement sur les figures 1 à 4, des pièces formant consoles ou potences 13c, 13d prolongent respectivement les pieds des piliers 4c et 4d en étant associées aux sabots 10c et 10d, comme on le voit bien sur la figure 4. On remarquera ici que les potences 13c et 13d sont prévues seulement sur les deux sabots 10c et 10d, à l'opposé des deux sabots 10a et 10b qui supportent la flèche 5 de la grue, et cela pour les raisons expliquées plus loin dans le fonctionnement de la grue.

Comme cela est bien visible sur les figures 1 et 4, les potences 13c et 13d contournent la périphérie externe de la couronne 7, et l'extrémité 14 de ces potences est infléchie vers l'axe de pivotement X-X' de l'embase 2 sur le soubassement fixe 3, de façon à réaliser une autre surface d'appui 15 qui elle aussi porte des enceintes 12 à confinement de fluide sous pression, coopérant avec la piste annulaire inférieure 9 de la couronne 7.

Comme on le voit mieux sur la figure 5, chaque enceinte de confinement 12 coopérant avec les pistes annulaires supérieure 8 et inférieure 9 de la couronne 7, est constituée par une jupe annulaire gonflable 16 associée à une plaque circulaire 17. Cette plaque 17 peut être solidaire d'un châssis 18 fixé sur le dessous 19 des sabots 10a, 10b, 10c et 10d. Elle peut également être directement fixée sur le dessus 20 des sabots inférieurs ou extrémités infléchies 14 des consoles 13c et 13d.

La jupe annulaire gonflable 16 de chaque enceinte délimite un espace intérieur ou central 21 qui est alimenté, de même que ladite jupe, en fluide sous pression grâce à un générateur 22 de fluide sous pression raccordé par une tuyauterie 23 et une vanne d'isolement 24 à chaque jupe 16 et espace central 21. Comme on l'a montré à titre d'exemple sur la figure 5, la tuyauterie 23 débouche en 24 dans la plaque circulaire 17 qui est percée d'orifices 25 pour permettre l'alimentation en fluide sous pression de la jupe 16 et de l'espace 21 intérieur à ladite jupe.

A l'intérieur de l'espace 21 délimité par chaque jupe annulaire gonflable 16, on prévoit une butée 26, de préférence élastique, qui est fixée contre la plaque rigide 17 portant la jupe 16. Une telle butée 26 permet avantageusement de répartir uniformément la charge de l'embase 2 de la grue sur les pistes annulaires 8 et 9 lorsque la rotation est stoppée et lorsque l'alimentation en fluide sous pression est interrompue.

Mais, on décrira ci-après très brièvement le fonctionnement des enceintes de sustentation 11 en se reportant plus particulièrement à la figure 5.

Lorsque les enceintes 12 sont appliquées sur les pistes 8 et 9, l'espace central 21 se trouve confiné et constitue une chambre que l'on peut pressuriser de façon à transmettre les charges entre l'embase tournante 2 et le soubassement fixe 3 de la grue, comme cela est montré en traits fantômes sur la figure 5, étant entendu que, dans cette position, la butée élastique 26 prend appui sur lesdites pistes 8 et 9. On comprend donc que le débit de fluide sous pression procuré par le générateur 22 permettra de gonfler la jupe 16 et de maintenir entre la base 16a de cette jupe et la surface des pistes 8 et 9 un film fluide de faible épaisseur qui s'échappera suivant les flèches F de façon à éviter le contact entre les éléments rigides et permettre ainsi la rotation de l'embase 2 de la grue sur le soubassement fixe 3, puisque toutes les enceintes 12 permettront de créer une sustentation assurant une traînée de frottement minimum.

On notera ici que le fluide sous pression pour alimenter lesdites enceintes pourrait être de l'air, de l'eau ou même de la graisse, ces fluides pouvant être récupérés dans une bâche ou pour une autre utilisation.

Comme on le voit sur les figures 2 et 3, les enceintes de confinement 12 peuvent être réparties suivant une ligne (sabots 10c et 10d) ou suivant plusieurs lignes (sabots 10a et 10b). Dans ce dernier cas, l'ensemble des enceintes 12 est groupé sur un seul et même châssis tel que 18, comme on le voit sur les figures 4 et 5. On remarquera ici que sur ces deux figures, on a représenté deux rangées d'enceintes 12 sous le sabot 10c, alors que

la figure 2 n'en comporte qu'une seule, cela dans le but de montrer que, sans sortir du cadre de l'invention, on peut parfaitement prévoir une ou plusieurs rangées d'enceintes 12 en fonction des besoins. Si, dans la figure 2, on a prévu deux rangées d'enceintes 12 sous les sabots 10a et 10b, c'est parce que la grue illustrée comporte une flèche déportée du côté de ces sabots qui doivent par conséquent supporter une charge plus lourde que les sabots 10c et 10d, la sustentation au niveau de ces sabots n'ayant pas besoin d'être aussi importante qu'au niveau des sabots 10a et 10b. On notera enfin ici que la dépressurisation du groupe d'enceintes porté par un seul et même châssis 18 permettra la rétractation de toutes les jupes 16 portées par ce châssis de sorte qu'on pourra aisément en effectuer le démontage et le remplacement par dépose dudit châssis qui est amovible.

On se reportera maintenant à la figure 6 pour décrire un deuxième mode de réalisation d'enceintes pouvant être utilisées dans un dispositif de supportage d'un organe très lourd, selon l'invention.

Ces enceintes, repérées d'une manière générale en 27 sur la figure 6, sont constituées chacune par un patin 28 ou analogue réalisé en un matériau élastiquement déformable, tel que par exemple un élastomère. Le patin 28 est fixé sur les sabots, tel que le sabot 10c représenté sur la figure 6, par l'intermédiaire d'un coussin 29 fixé sur le dessous 19 dudit sabot et qui permet avantageusement de stabiliser le patin 28 à une incidence nulle par rapport à la surface des pistes 8,9. Plus précisément, le patin 28 est relié au coussin 29 par l'intermédiaire d'une platine 30 et d'un collecteur 31 alimenté par une conduite 32 d'alimentation en fluide sous pression. La conduite 32 débouche dans des orifices 33 ménagés dans la platine 30, et lesdits orifices débouchent à leur tour dans des orifices correspondants prévus dans le patin 28, de façon à aboutir à l'interface entre la piste annulaire 8 ou 9 et ledit patin 28.

Dès lors, lorsque le fluide est injecté par les canaux 33, il s'insinue entre les surfaces en contact qu'il sépare et sa pression décroît par détente progressive depuis les orifices d'injection jusqu'au bord périphérique 28a du patin 28. En d'autres termes, celui-ci tend à fluer vers l'extérieur en créant une série de cavités telles que 34, toutes ces cavités étant bordées par le rebord 28a qui, en fonction de la pression, pourra laisser s'échapper vers l'extérieur un film de fluide suivant les flèches G de façon à permettre le déplacement ou la rotation de l'embase de la grue par rapport à son soubassement fixe 3, étant donné que le frottement de glissement entre ces deux éléments peut être réduit à une valeur très faible voisine de 0,001. Bien entendu, lorsque l'alimentation en fluide sous pression est interrompue, le patin 28 reprend sa forme initiale et présente une surface d'appui sensiblement plane pour assurer la transmission de la charge à l'arrêt en prenant contact avec la piste 8 ou 9.

Bien entendu, comme pour le mode de réalisation précédent, on pourra réaliser des groupements quelconques d'enceintes telles que 27 entre l'embase 2 et le soubassement fixe 3. Enfin, on notera que les enceintes 27 sont particulièrement adaptées aux fortes pressions et peuvent utiliser de la graisse comme fluide de sustentation.

Ayant ainsi décrit la structure générale du dispositif de supportage selon l'invention ainsi que la structure et le fonctionnement des enceintes de sustentation équipant ce dispositif, on décrira maintenant brièvement le fonctionnement de l'ensemble comme suit.

Lorsqu'aucune charge extérieure n'est soulevée par la flèche 5 de la grue, l'embase 2 se trouve appliquée sur la piste 8. Plus précisément, la charge est transmise par les piliers 4a, 4b, 4c et 4d aux sabots 10a, 10b, 10c et 10d respectivement qui portent les enceintes 12 ou 27, de sorte que les butées 26 (dans le cas des enceintes 12) ou les patins 28 (dans le cas des enceintes 27) sont en contact avec la piste 8 du soubassement fixe 3.

Lorsqu'on veut faire pivoter la grue sans charge, les enceintes solidaires des sabots sont alimentées en fluide sous pression par le générateur 22 de sorte que, dans le cas des enceintes 12 par exemple, les jupes annulaires 16 sont gonflées et l'embase tournante 2, mise en sustentation, est légèrement soulevée par rapport à la piste 8, les butées 26 décollant bien sûr de ladite piste si bien qu'il n'y a plus de contact entre l'embase 2 et le soubassement 3 qui peuvent glisser l'une par rapport à l'autre avec un frottement réduit au minimum.

Lorsqu'une charge extérieure est soulevée par la grue, la résultante des masses de la partie tournante de la grue ajoutées à la charge soulevée se trouve appliquée à l'extérieur de la piste 8. Ainsi, cette résultante est transmise d'une part du côté de la flèche 5 en compression par les piliers avant 4a et 4b aux sabots 10a et 10b portant les enceintes 12 dont les patins 26 sont en contact avec la piste 8 du soubassement fixe 3, et d'autre part, en traction par les piliers arrière 4c et 4d aux extrémités infléchies ou sabots 14 supportant aussi des enceintes, et dont les butées élastiques 26 sont en contact avec la piste 9 de la couronne 7.

Dès lors, pour faire pivoter la grue en charge, les enceintes des sabots supérieurs avant 10a et 10b d'une part et des parties ou sabots inférieurs 14 d'autre part sont alimentées en fluide sous pression à partir du générateur 22. C'est dire que les jupes annulaires 16 sont gonflées et qu'un moment de pivotement est crée par la pression de fluide s'exerçant à l'avant de la grue sur la piste 8 et à l'arrière sur la piste 9.

L'embase 3 est donc légèrement basculée en sens inverse du moment appliqué par la charge à soulever et les sabots 10a, 10b, et 14 décollent des pistes 8 et 9, de sorte que finalement l'embase de la grue peut tourner sur le soubassement avec une traînée de frottement réduite au minimum.

On a donc réalisé suivant la présente invention un dispositif permettant de réaliser économiquement des grues géantes pouvant déplacer en rotation des charges très élevées et permettant également de réduire considérablement l'effort de mise en rotation de la partie tournante desdites grues.

Bien entendu, l'invention n'est nullement limitée aux modes de réalisation décrits et illustrés qui n'ont été donnés qu'à titre d'exemple.

C'est ainsi que le dispositif de l'invention pourrait parfaitement s'appliquer au déplacement en translation de poutres très lourdes montées en porte-à-faux sur des plateformes de forage par exemple.

L'invention comprend tous les équivalents techniques des moyens décrits ainsi que leurs combinaisons si celles-ci sont effectuées suivant son esprit.

Revendications

1. Dispositif de supportage d'un organe très lourd qui est déplaçable en translation ou en rotation sur un socle fixe, et dont la surface d'appui est munie d'une pluralité d'enceintes de sustentation à confinement de fluide sous pression permettant un glissement relatif de l'organe par rapport au socle fixe caractérisé en ce que lesdites enceintes (12, 27) sont constituées chacune :

- soit par une jupe annulaire gonflable (16) fermée par la surface d'appui (11) de l'organe lourd et reliée à une source (22) de fluide sous pression qui alimente également l'espace intérieur (21) délimité par ladite jupe pour créer, sous l'effet de la pression, un film de fluide entre la paroi de la jupe et le socle fixe (3)
- soit par un patin ou analogue (28) en matériau élastiquement déformable, tel que par exemple un élastomère, solidaire de la surface d'appui (11) de l'organe lourd, et dont la face en regard du socle fixe forme avec ledit socle un interface alimenté en fluide, sous pression au travers dudit patin (28) pour créer dans celui-ci sous l'effet de la pression, une pluralité de cavités ou analogues (34) entourées par un rebord périphérique (28a).

2. Dispositif selon la revendication 1, caractérisé en ce que le patin précité (28) est solidaire de la surface d'appui (11) de l'organe lourd par l'intermédiaire d'au moins un élément (31) formant collecteur de fluide sous pression et fixé à ladite surface d'appui par l'intermédiaire d'un coussin élastiquement déformable (29).

3. Dispositif selon la revendication 1 ou 2, et du type comprenant des sabots ou analogues constituant la surface d'appui précitée et dont au moins l'un comprend une potence à extrémité infléchie vers l'axe de pivotement de l'organe lourd sur le socle fixe pour former une autre surface d'appui, caractérisé en ce que cette autre surface d'appui porte les enceintes précitées (12, 27).

4. Dispositif selon l'une des revendications 1 à 3, caractérisé en ce que le fluide sous pression parvenant aux enceintes précitées est de la graisse éventuellement récupérable après échappement des enceintes.

5. Dispositif selon l'une des revendications 1 à 4, caractérisé en ce que l'organe lourd précité est une grue géante ou une poutre en console ou en porte-à-faux.

Fig.1

Fig. 2

Fig. 3

Fig. 4

Fig. 5

Fig. 6

3/3

0165854

Office européen
des brevets

**RAPPORT DE RECHERCHE EUROPEENNE**

01.65854.
Numéro de la demande

EP 85 40 1047

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| Y | FR-A-2 323 623 (TAX) <br> * Page 7, lignes 18-39; page 8, lignes 1-14 * | 1,4,5 | B 66 C 23/84 <br> F 16 C 32/06 |
| Y | MACHINE DESIGN, vol. 40, 25 avril 1968, pages 142-159, Cleveland, US; S. GRAY: "Gas bearings" <br> * Page 145 * | 1,4,5 | |
| Y | US-A-3 704 920 (PAN) <br> * Abrégé; colonne 5, lignes 43-67; colonne 6, lignes 1-27; figures 1-3 * | 1,4,5 | |
| A | DE-A-1 525 009 (AHRENS) | | |
| A | FR-A-2 185 019 (I.H.C.) | | DOMAINES TECHNIQUES RECHERCHES (Int. Cl.4) |
| A | DE-A-1 675 094 (SCHAFER) | | B 66 C <br> E 21 B <br> F 16 C |
| A | FR-A-1 503 023 (WERF GUSTO) | | |
| A | US-A-3 393 026 (GREGSON) | | |
| | ---      -/- | | |

Le présent rapport de recherche a été établi pour toutes les revendications

| Lieu de la recherche <br> LA HAYE | Date d'achèvement de la recherche <br> 29-08-1985 | Examinateur <br> VAN DEN BERGHE E.J.J |
|---|---|---|

**0165854**
Numéro de la demande

**RAPPORT DE RECHERCHE EUROPEENNE**

Office européen
des brevets

EP 85 40 1047

Page 2

## DOCUMENTS CONSIDERES COMME PERTINENTS

| Catégorie | Citation du document avec indication. en cas de besoin. des parties pertinentes | Revendication concernee | CLASSEMENT DE LA DEMANDE (Int Cl 4) |
|---|---|---|---|
| A | DE-A-1 575 366 (BROWN BOVERI) | | |

-----

**DOMAINES TECHNIQUES RECHERCHES (Int. Cl.4)**

Le présent rapport de recherche a été établi pour toutes les revendications

| Lieu de la recherche | Date d'achèvement de la recherche | Examinateur |
|---|---|---|
| LA HAYE | 29-08-1985 | VAN DEN BERGHE E.J.J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82